# EUROPEAN PATENT SPECIFICATION

(11) **EP 3 056 679 B1**
(45) Date of publication and mention of the grant of the patent: **25.07.2018**
(21) Application number: 16155241.9
(22) Date of filing: 11.02.2016
(51) Int. Cl.: F01D 5/28, F01D 11/12

(54) **ABRASIVE BLADE TIP WITH IMPROVED WEAR AT HIGH INTERACTION RATE**
SCHLEIFENDE SCHAUFELSPITZE MIT ERHÖHTEM VERSCHLEISS BEI HOHER INTERAKTIONSRATE
POINTE DE LAME ABRASIVE PRÉSENTANT UNE USURE AMÉLIORÉE À TAUX D'INTERACTION ÉLEVÉ

(30) Priority: 12.02.2015 US 201514620310
(43) Date of publication of application: 17.08.2016
(73) Proprietor: United Technologies Corporation, Farmington, CT 06032 (US)
(72) Inventor: STROCK, Christopher W., Kennebunk, ME 04043 (US)
(74) Representative: Dehns

(56) References cited:
- EP-A1- 0 443 877
- EP-A1- 0 484 115
- US-A- 5 952 110
- US-A1- 2003 126 800

## Description

### BACKGROUND

The present disclosure is directed to abrasive blade tip coating. More particularly, a composite structure that distributes cutting loads from individual highly loaded grit particles to adjacent grit particles, thus reducing stress at the matrix which holds individual grit particles of the abrasive blade tip coating.

Gas turbine engines and other turbomachines have rows of rotating blades contained within a generally cylindrical case. As the blades rotate, their tips move in close proximity to the case. To maximize engine operating efficiency, the leakage of the gas or other working fluid around the blade tips should be minimized. This may be achieved by blade and sealing systems in which the blade tips rub against a seal attached to the interior of the engine case. Generally, the blade tip is made to be harder and more abrasive than the seal; thus, the blade tips will cut into the seal during those portions of the engine operating cycle when they come into contact with each other.

During the operation of a gas turbine engine, it is desired to maintain minimum clearance between the tips of the turbine blades and the corresponding seals. A large gap results in decreased efficiency of the turbine, due to the escape of high-energy gases. Conversely, friction between the blades and seals causes excessive component wear and wastes energy. Since aircraft turbines experience cyclic mechanical and thermal load variations during operation their geometry varies during the different stages of the operating cycle. Active clearance control and abrasive blade tips are currently used to establish and maintain optimum clearance during operation. Ideally, those tips should retain their cutting action over many operating cycles compensating for any progressive changes in turbine geometry.

During certain engine operating conditions engines have shown very high radial interaction rate (∼40"/s) that cause rapid depletion of the abrasive grit portions of the abrasive blade tip coating when rubbed against the air seals.

The unwanted rubbing of exposed blade tips, such as Ti blade material, results from the depletion of the abrasive blade tip coating. This results in Ti blade material contact with the abradable material of the air seal. The Ti blade material contact with the abradable where the abrasive has been depleted can create Ti sparking which may cause unwanted conditions within the gas turbine engine.

An abrasive tip is needed that provides a higher wear ratio with abradable outer air seal material at the high interaction rates associated with certain off-normal engine operating conditions, such as, a bird strike and surge.

US 2003/0126800 A1 discloses an abrasive coating and a process for forming the abrasive coating by co-depositing hard particles within a matrix material onto a substrate using a cold spray process.

EP 0 443 877 A1 discloses a method of producing a gas turbine blade having an abrasive tip. Coarse particles of an abrasive materials are anchored to a binding coat comprising MCrAlY.

EP 0 484 115 A1 discloses a method for applying a thin layer of uncoated abrasive particles to the tip of a turbine blade.

US 5,952,110 A discloses an abrasive coating suitable for forming an abrasive blade tip of a gas turbine engine. The abrasive coating includes an MCrAl alloy layer, a ceramic layer overlying the alloy layer and abrasive particles dispersed between the ceramic layer and the alloy layer.

### SUMMARY

According to a first aspect, there is provided an abrasive blade tip coating as claimed in claim 1.

In an exemplary embodiment, the first grit particles comprise a SiC material.

In an exemplary embodiment, the matrix material comprises a matrix formed from MCrAlY, wherein M is Ni or Co.

In an exemplary embodiment, an adhesion layer is coupled to the top surface, wherein the adhesion layer is configured to adhere the first grit particles to the top layer.

In an exemplary embodiment, the adhesion layer comprises the same material as the matrix material.

In an exemplary embodiment, the matrix material and the second grit particles combined comprise a modulus of elasticity greater than the matrix material alone.

According to a further aspect, a turbine engine component as claimed in 3 is provided.

In an exemplary embodiment, the first grit particles are sized from about 0.04 to about 0.15 millimeters.

In an exemplary embodiment, the second grit particles are sized from 0.01 to about 0.1 millimeters.

In an exemplary embodiment, the matrix material and the second grit particles are configured to distribute a cutting load from individual highly loaded first grit particles to adjacent first grit particles, thereby reducing stress at the matrix material.

In an exemplary embodiment, each one of the first grit particles are configured with a grit spacing configured to protect the matrix material from wear by an abradable rub.

In an exemplary embodiment, the turbine engine component is a blade.

From a further aspect, a process for coating a turbine engine blade as claimed in claim 12 is provided.

In an exemplary embodiment, the process further comprises spacing the first grit particles apart, wherein the spacing is configured to protect the matrix material from wear by an abradable rub.

In an exemplary embodiment, the process further comprises distributing a cutting load from individual highly loaded first grit particles to adjacent first grit particles, thereby reducing stress at the matrix composite material.

In an exemplary embodiment, the matrix material and the second grit particles combined comprise a modulus of elasticity greater than said matrix material alone.

In an exemplary embodiment, the process further comprises applying a base layer to the blade tip prior to applying the adhesion layer.

Other details of the abrasive blade tip coating are set forth in the following detailed description and the accompanying drawing wherein like reference numerals depict like elements.

### BRIEF DESCRIPTION OF THE DRAWINGS

FIG. 1 is a schematic representation of abrasive composite coating applied to a tip of a turbine engine component; and
FIG. 2 is a schematic cross-sectional view of the exemplary abrasive blade tip coating.

### DETAILED DESCRIPTION

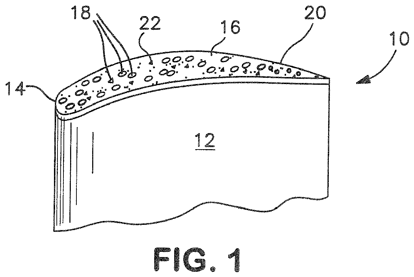

Referring now to FIG. 1 there is illustrated a turbine engine component 10, such as a compressor blade or vane. The blade 10 has an airfoil portion 12 with a tip 14. The tip 14 has an abrasive coating 16 applied to it. The abrasive coating 16, comprises a composite material that includes an abrasive particulate/grit or simply first grit 18, such as cubic boron nitride (CBN), coated Silicon carbide (SiC), or another hard ceramic phase. The grit 18 can be sized as a coarse grit. In an exemplary embodiment the grit 18 can be sized from about 70 to about 150 microns. The first grit 18 is embedded in a plating layer matrix composite 20. The matrix 20 comprises a suitable oxidation-resistant alloy matrix. In an exemplary embedment the plating layer comprises a matrix formed from MCrAlY, the M standing for either Ni or Co or both. In an exemplary embodiment, the matrix 20 can comprise pure nickel, nickel alloy, copper, copper alloy, cobalt, cobalt alloy, or chrome alloy. A second grit 22 is interspersed between the first grit 18. The second grit 22 is a smaller sized particle than the larger first grit material 18. In an exemplary embodiment, the second grit 22 is sized to about 2/3 the size of the first grit 18. The second grit 22 can be from about 10% to about 50% of the diameter of the first grit 18. The spaces between the first grit 18 and second grit 22 are filled in with the plating layer 20. The resulting blade tip 14 with abrasive coating 16 is particularly well suited for rubbing metal as well as ceramic air seals (not shown).

The turbine engine component/blade 10 may be formed from a titanium-based alloy or a nickel-based alloy. In an exemplary embodiment, the blade 10 includes a (Ti) titanium-based alloy.

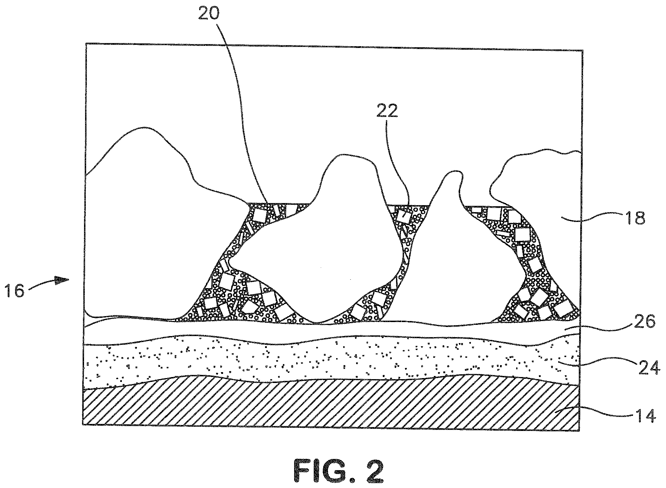

Referring to FIG. 2 an exemplary abrasive coating 16 is shown. The abrasive coating 16 includes the large first grit particles 18 and relatively smaller second grit particles 22 interspersed throughout the matrix 20.

In an exemplary embodiment, the first grit particles 18 range in size from about 0.04 to about 0.15 millimeters (mm) nominally. First grit 18 particle sizes can range up to about 0.15 mm nominally.

The first grit particles 18 are narrowly spaced apart. The narrow spacing can provide protection from abrasion to the matrix composite material 20 located between each first grit particle 18. This abrasion protection thus, enables greater first grit 18 retention by the matrix composite material 20.

In alternative embodiments, the large grit particles 18 can comprise hard materials. In an exemplary embodiment, the grit 18 can comprise, zirconia, aluminum di-boride, aluminum nitride, aluminum nitride-carbon, or diamond. An exemplary embodiment can include grit 18 from a DURALUM ATZ II R brand from Washington Mills, of dense fused alumina-zirconia refractor grain.

In an exemplary embodiment, the second grit 22 can range in size from about 0.01 to about 0.10 mm nominally. The second grit particles 22 comprise the same material as the larger grit particles 18..

The smaller second grit particles 22 function to increase the strength of the matrix material 20 and buttress the first grit particles 18 increasing the load resistance of the first grit 18.

The abrasive coating 16 can include a base layer 24 bonded to the blade tip 14. The base layer 24 can be the same material as the matrix 20. The base layer 24 can be from about 1 to about 100 microns in thickness. In an exemplary embodiment, the base layer 24 can be from about 25 to about 50 microns in thickness. The base layer 24 can be optionally applied.

An adhesion layer 26 comprising the plating material utilized in the matrix 20 can be applied to the base layer 24 or can be coated directly to the blade tip 14. The adhesion layer 26 prepares the surface of the tip 14 for the first grit 18 to adhere to during application of the first grit 18. The adhesion layer 26 can comprise the same basic material as the matrix 20 or other beneficial materials that bind the first grit 18 to the blade tip 14 or alternatively the base layer 24. In an exemplary embodiment the adhesion layer 24 comprises a Ni alloy matrix material.

The exemplary abrasive coating 16 includes a portion of each first grit particle 18 projecting outward above the surface of the matrix material 20, thereby enabling favorable rubbing interaction with metal or ceramic seals during engine operation. The unexposed portion of the first grit particles 18 are surrounded by matrix material 20 and second grit 22. The first grit particles 18 can be spaced apart from each other with a minimal distance of separation and arranged uniformly spaced apart. The matrix material 20 and smaller second grit 22, as well as first grit particles 18 can be securely bonded to the blade tip 14.

The combination of the smaller grit 22 blended with the matrix material 20 securely bonded and surrounding the grit particles 18 achieve a higher modulus of elasticity than merely having only the matrix 20 surrounding the first grit 18. The combination of smaller grit 22 and matrix 20 also provides superior support to the first grit 18.

The abrasive blade tip coating takes advantage of the characteristics of a composite structure by distributing cutting load from individual highly loaded grit particles to adjacent grit particles, thus reducing stress at the matrix, which holds individual grit particles. The abrasive blade tip coating reduces inter-particle spacing and grit loading. The exemplary abrasive blade tip coating demonstrates superior durability that is associated with the ability of individual grits to withstand higher loads.

Better transfer of loads between abrasive particles allows individual grits to support higher cutting loads before being pulled out of the abrasive composite blade tip. Another benefit of the exemplary abrasive tip coating is that the narrower grit spacing provides better protection of the Ni matrix from wear by abradable rub debris. The exemplary abrasive composite blade tip coating enables for retention of the matrix that also relates to better grit retention.

There has been provided an abrasive blade tip coating. While the abrasive blade tip coating has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. An abrasive blade tip coating comprising:
a blade tip (14) having a top surface;
a plurality of first grit particles (18) dispersed over said top surface of said blade tip (14);
a plurality of second grit particles (22) closely packed between each of said plurality of first grit particles (18), said second grit particles (22) having a nominal size smaller than said first grit particles (18); and
a matrix material (20) bonded to said top surface; said matrix material (20) enveloping said second grit particles (22) and said matrix material (20) bonding to and partially surrounding said first grit particles (18), wherein said first grit particles (18) extend above said matrix material (20) and said second grit particles (22) relative to said top surface, **characterised in that**
said second grit particles (22) comprise the same material as said first grit particles (18).

2. The coating according to claim 1, further comprising:
an adhesion layer (26) coupled to said top surface, wherein said adhesion layer (26) is configured to adhere said first grit particles (18) to said top surface.

3. A turbine engine component comprising:
an airfoil portion; and
an abrasive blade tip coating as claimed in claim 1, wherein
the blade tip (14) is provided on the airfoil portion,
the coating (16) is a composite abrasive coating (16) bonded to said tip (14),
said composite abrasive coating (16) comprising an adhesion layer (26) bonded to said tip (14),
a layer of the first grit particles (18) is bonded to said adhesion layer (26);
the plurality of second grit particles (22) are dispersed around said first grit particles (18), said second grit particles (22) being smaller than said first grit particles (18); and
said second grit particles (22) are enveloped in the matrix material (20) surrounding an unexposed portion of said first grit particles (18); and said matrix material (22) is coupled to said adhesion layer (26).

4. The coating or component according to any preceding claim, wherein said adhesion layer (26) comprises the same material as said matrix material (20).

5. The coating or component according to any preceding claim, wherein said first grit particles (18) comprise a SiC material.

6. The coating or component according to any preceding claim, wherein said matrix material (20) comprises a matrix formed from MCrAlY, wherein M is Ni or Co.

7. The coating or component according to any preceding claim, wherein said matrix material (20) and said second grit particles (22) combined comprise a modulus of elasticity greater than said matrix material (20) alone.

8. The coating or turbine engine component according to any preceding claim, wherein said first grit particles (18) are sized from about 0.04 to about 0.15 millimeters.

9. The coating or turbine engine component according to any preceding claim, wherein said second grit particles (22) are sized from 0.01 to about 0.1 millimeters.

10. The coating or turbine engine component according to any preceding claim, wherein said matrix material (20) and said second grit particles (22) are configured to distribute a cutting load from individual highly loaded first grit particles (18) to adjacent first grit particles (18), thereby reducing stress at the matrix material (20).

11. The turbine engine component according to any of claims 3 to 10, wherein said turbine engine component is a blade.

12. A process for coating a turbine engine blade (10) with an abrasive, said process comprising:
applying an adhesion layer (26) onto a tip (14) of said blade (10);
adhering a plurality of first grit particles (18) to said adhesion layer (40), wherein narrow spaces are formed between said first grit particles (18);
filling said narrow spaces between said first grit particles (18) with a plurality of second grit particles (22), wherein said second grit particles (22) are smaller than the first grit particles (18);
enveloping said second grit particles (22) with a matrix material (20); and
surrounding each of said first grit particles (18) with said matrix material (20) exposing a portion of said first grit particles (18) above said matrix material (20) and said second grit particles (22), **characterised in that**
said second grit particles (22) comprise the same material as said first grit particles (18).

13. The process of claim 12, wherein said matrix material (20) and said second grit particles (22) combined comprise a modulus of elasticity greater than said matrix material alone (20).

14. The process of claim 12 or 13, further comprising applying a base layer (24) to said blade tip (14) prior to applying said adhesion layer (26).

## Patentansprüche

1. Schleifende Schaufelspitzenbeschichtung, umfassend:
eine Schaufelspitze (14) mit einer oberen Fläche;
eine Vielzahl von ersten Abriebpartikeln (18), die über die obere Fläche der Schaufelspitze (14) verteilt sind;
eine Vielzahl von zweiten Abriebpartikeln (22), die eng zwischen jeder der Vielzahl von ersten Abriebpartikeln (18) gepackt sind, wobei die zweiten Abriebpartikel (22) eine Nenngröße kleiner als die ersten Abriebpartikel (18) aufweisen; und
ein Matrixmaterial (20), das an die obere Fläche gebunden ist; wobei das Matrixmaterial (20) die zweiten Abriebpartikel (22) umhüllt und wobei das Matrixmaterial (20) an die ersten Abriebpartikel (18) gebunden ist und sie teilweise umgibt, wobei sich die ersten Abriebpartikel (18) über das Matrixmaterial (20) und die zweiten Abriebpartikel (22) in Bezug auf die obere Fläche erstrecken, **dadurch gekennzeichnet, dass**
die zweiten Abriebpartikel (22) dasselbe Material wie die ersten Abriebpartikel (18) umfassen.

2. Beschichtung nach Anspruch 1, ferner umfassend:
eine Haftschicht (26), die an die obere Fläche gekoppelt ist, wobei die Haftschicht (26) konfiguriert ist, um die ersten Abriebpartikel (18) an die obere Fläche anzuhaften.

3. Turbinentriebwerkskomponente, umfassend:
einen Tragflächenabschnitt; und
eine schleifende Schaufelspitzenbeschichtung nach Anspruch 1, wobei
die Schaufelspitze (14) an dem Tragflächenabschnitt bereitgestellt ist,
die Beschichtung (16) eine schleifende Verbundbeschichtung (16) ist, die an die Spitze (14) gebunden ist,
wobei die schleifende Verbundbeschichtung (16) eine Haftschicht (26) umfasst, die an die Spitze (14) gebunden ist,
eine Schicht von den ersten Abriebpartikeln (18) an die Haftschicht (26) gebunden ist;
die Vielzahl von zweiten Abriebpartikeln (22) um die ersten Abriebpartikel (18) verteilt sind, wobei die zweiten Abriebpartikel (22) kleiner als die ersten Abriebpartikel (18) sind; und
die Vielzahl von zweiten Abriebpartikeln (22) in dem Matrixmaterial (20) umhüllt sind und einen nicht freiliegenden Abschnitt der ersten Abriebpartikel (18) umgeben; und das Matrixmaterial (22) an die Haftschicht (26) gekoppelt ist.

4. Beschichtung oder Komponente nach einem vorherigen Anspruch, wobei die Haftschicht (26) dasselbe Material wie das Matrixmaterial (20) umfasst.

5. Beschichtung oder Komponente nach einem vorherigen Anspruch, wobei die ersten Abriebpartikel (18) ein SiC-Material umfassen.

6. Beschichtung oder Komponente nach einem vorherigen Anspruch, wobei das Matrixmaterial (20) eine Matrix umfasst, die aus MCrAlY gebildet ist, wobei M Ni oder Co ist.

7. Beschichtung oder Komponente nach einem vorherigen Anspruch, wobei das Matrixmaterial (20) und die zweiten Abriebpartikel (22) kombiniert ein Elastizitätsmodul größer als das Matrixmaterial (20) allein umfassen.

8. Beschichtung oder Turbinentriebwerkskomponente nach einem vorherigen Anspruch, wobei die ersten Abriebpartikel (18) eine Größe von ca. 0,04 bis ca. 0,15 Millimetern haben.

9. Beschichtung oder Turbinentriebwerkskomponente nach einem vorherigen Anspruch, wobei die zweiten Abriebpartikel (22) eine Größe von ca. 0,01 bis ca. 0,1 Millimetern haben.

10. Beschichtung oder Turbinentriebwerkskomponente nach einem vorherigen Anspruch, wobei das Matrixmaterial (20) und die zweiten Abriebpartikel (22) konfiguriert sind, um eine Schneidlast von individuell hoch belasteten ersten Abriebpartikeln (18) auf anliegende erste Abriebpartikel (18) zu verteilen, wodurch Spannung an dem Matrixmaterial (20) reduziert wird.

11. Turbinentriebwerkskomponente nach einem der Ansprüche 3 bis 10, wobei die Turbinentriebwerkskomponente eine Schaufel ist.

12. Verfahren zum Beschichten einer Turbinentriebwerksschaufel (10) mit einem Abriebmittel, wobei das Verfahren Folgendes umfasst:
Anwenden einer Haftschicht (26) auf eine Spitze (14) der Schaufel (10);
Anhaften einer Vielzahl von ersten Abriebpartikeln (18) an die Haftschicht (40), wobei enge Räume zwischen den ersten Abriebpartikeln (18) gebildet werden;
Füllen der engen Räume zwischen den ersten Abriebpartikeln (18) mit einer Vielzahl von zweiten Abriebpartikeln (22), wobei die zweiten Abriebpartikel (22) kleiner als die ersten Abriebpartikel (18) sind;
Umhüllen der zweiten Abriebpartikel (22) mit einem Matrixmaterial (20); und
Umgeben von jedem der ersten Abriebpartikel (18) mit dem Matrixmaterial (20), wodurch ein Abschnitt der ersten Abriebpartikel (18) über dem Matrixmaterial (20) und den zweiten Abriebpartikeln (22) freigelegt wird, **dadurch gekennzeichnet, dass**
die zweiten Abriebpartikel (22) dasselbe Material wie die ersten Abriebpartikel (18) umfassen.

13. Verfahren nach Anspruch 12, wobei das Matrixmaterial (20) und die zweiten Abriebpartikel (22) kombiniert ein Elastizitätsmodul größer als das Matrixmaterial (20) allein umfassen.

14. Verfahren nach Anspruch 12 oder 13, ferner umfassend ein Anwenden einer Grundschicht (24) auf die Schaufelspitze (14) vor einem Anwenden der Haftschicht (26).

## Revendications

1. Revêtement de pointe de lame abrasive comprenant :
une pointe de lame (14) ayant une surface supérieure ;
une pluralité de premières particules de grain (18) dispersées sur ladite surface supérieure de ladite pointe de lame (14) ;
une pluralité de secondes particules de grain (22) étroitement serrées entre chacune de ladite pluralité de premières particules de grain (18), lesdites secondes particules de grain (22) ayant une taille nominale inférieure à celles desdites premières particules de grain (18) ; et
un matériau de matrice (20) lié à ladite surface supérieure ; ledit matériau de matrice (20) enveloppant lesdites secondes particules de grain (22) et ledit matériau de matrice (20) se liant à et entourant partiellement lesdites premières particules de grain (18), dans lequel lesdites premières particules de grain (18) s'étendent au-dessus dudit matériau de matrice (20) et lesdites secondes particules de grain (22) par rapport à ladite surface supérieure, **caractérisé en ce que**
lesdites secondes particules de grain (22) comprennent le même matériau que lesdites premières particules de grain (18).

2. Revêtement selon la revendication 1, comprenant en outre :
une couche d'adhérence (26) couplée à ladite surface supérieure, dans lequel ladite couche d'adhérence (26) est conçue de manière à faire adhérer lesdites premières particules de grain (18) à ladite surface supérieure.

3. Composant de moteur à turbine comprenant :
une partie de profil aérodynamique ; et
un revêtement de pointe de lame abrasive selon la revendication 1, dans lequel
la pointe de lame (14) est prévue sur la partie de profil aérodynamique,
le revêtement (16) est un revêtement abrasif composite (16) lié à ladite pointe (14),
ledit revêtement abrasif composite (16) comprenant une couche d'adhérence (26) liée à ladite pointe (14),
une couche des premières particules de grain (18) est liée à ladite couche d'adhérence (26) ;
la pluralité de secondes particules de grain (22) est dispersée autour desdites premières particules de grain (18), lesdites secondes particules de grain (22) étant plus petites que lesdites premières particules de grain (18) ; et
lesdites secondes particules de grain (22) sont enveloppées dans le matériau de matrice (20) entourant une partie non exposée desdites premières particules de grain (18) ; et ledit matériau de matrice (22) est couplé à ladite couche d'adhérence (26).

4. Revêtement ou composant selon une quelconque revendication précédente, dans lequel ladite couche d'adhérence (26) comprend le même matériau que ledit matériau de matrice (20).

5. Revêtement ou composant selon une quelconque revendication précédente, dans lequel lesdites premières particules de grain (18) comprennent un matériau SiC.

6. Revêtement ou composant selon une quelconque revendication précédente, dans lequel ledit matériau de matrice (20) comprend une matrice formée à partir de MCrAlY, où M est Ni ou Co.

7. Revêtement ou composant selon une quelconque revendication précédente, dans lequel ledit matériau de matrice (20) et lesdites secondes particules de grain (22) combinées comprennent un module d'élasticité supérieur audit matériau de matrice (20) seul.

8. Revêtement ou composant de moteur à turbine selon une quelconque revendication précédente, dans lequel lesdites premières particules de grain (18) mesurent entre environ 0,04 et environ 0,15 millimètre.

9. Revêtement ou composant de moteur à turbine selon une quelconque revendication précédente, dans lequel lesdites secondes particules de grain (22) mesurent entre environ 0,01 et environ 0,1 millimètre.

10. Revêtement ou composant de moteur à turbine selon une quelconque revendication précédente, dans lequel ledit matériau de matrice (20) et lesdites secondes particules de grain (22) sont conçus de manière à distribuer un effort de coupe de premières particules de grain (18) individuelles, hautement chargées à des premières particules de grain adjacentes (18), en réduisant ainsi la contrainte au niveau du matériau de matrice (20).

11. Composant de moteur à turbine selon l'une quelconque des revendications 3 à 10, dans lequel ledit composant de moteur à turbine est une lame.

12. Procédé de revêtement d'une lame de moteur à turbine (10) avec un abrasif, ledit procédé comprenant :
l'application d'une couche d'adhérence (26) sur une pointe (14) de ladite lame (10) ;
le fait de faire adhérer une pluralité de premières particules de grain (18) à ladite couche d'adhérence (40), dans lequel des espaces étroits sont formés entre lesdites premières particules de grain (18) ;
le remplissage desdits espaces étroits entre lesdites premières particules de grain (18) avec une pluralité de secondes particules de grain (22), dans lequel lesdites secondes particules de grain (22) sont plus petites que lesdites premières particules de grain (18) ;
le fait d'envelopper lesdites secondes particules de grain (22) avec un matériau de matrice (20) ; et
le fait d'entourer chacune desdites premières particules de grain (18) avec ledit matériau de matrice (20) exposant une partie desdites premières particules de grain (18) au-dessus dudit matériau de matrice (20) et desdites secondes particules de grain (22), **caractérisé en ce que**
lesdites secondes particules de grain (22) comprennent le même matériau que lesdites premières particules de grain (18).

13. Processus selon la revendication 12, dans lequel ledit matériau de matrice (20) et lesdites secondes particules de grain (22) combinées comprennent un module d'élasticité supérieur audit matériau de matrice seul (20).

14. Processus selon la revendication 12 ou 13, comprenant en outre l'application d'une couche de base (24) à ladite pointe de lame (14) avant l'application de ladite couche d'adhérence (26).
